# EUROPÄISCHE PATENTANMELDUNG

(11) **EP 3 447 352 A1**
(43) Veröffentlichungstag der Anmeldung: **27.02.2019**
(21) Anmeldenummer: 17187065.2
(22) Anmeldetag: 21.08.2017
(51) Int. Cl.: F16K 47/04, F16K 1/38, F16K 1/42, F16K 47/08, B33Y 80/00

(54) **VENTILANORDNUNG FÜR EINE STRÖMUNGSMASCHINE**

(71) Anmelder: Siemens Aktiengesellschaft, 80333 München (DE)
(72) Erfinder: Balkowski, Ingo, 47647 Kerken (DE); Guntermann, Svea, 45475 Mülheim an der Ruhr (DE); Penkner, Andreas, 40235 Düsseldorf (DE)

(57) **Zusammenfassung**

Die Erfindung betrifft eine Ventilanordnung (1) mit einem Ventilkegel (2) und einem Ventilsitz (10), wobei der Ventilkegel (2) und/oder der Ventilsitz (10) mit einer Chevronstruktur ausgebildet wird, um eine Verwirbelung des Strömungsmediums herbeizuführen, was zu einer Reduzierung der Schallemission führt.

## Beschreibung

Die Erfindung betrifft eine Ventilanordnung zum Durchströmen eines Strömungsmediums, umfassend einen Ventilkegel und ein Ventilgehäuse mit einem Ventilsitz, wobei die Ventilanordnung mit einem Ventileinlass und einem Ventilauslass ausgebildet ist, wobei der Ventilkegel gegen den Ventilsitz bewegbar ausgebildet ist und eine strömungstechnische Verbindung zwischen dem Ventileinlass und dem Ventilauslass herstellt, wenn der Ventilkegel vom Ventilsitz beabstandet ist und die strömungstechnische Verbindung geschlossen ist, wenn der Ventilkegel am Ventilsitz berührend anliegt.

Desweiteren betrifft die Erfindung ein Verfahren zur Herstellung einer Ventilanordnung.

Ventile werden beispielsweise in Dampfkraftanlagen eingesetzt, bei denen ein Dampf mit hoher Temperatur und einem hohen Druck durch Dampfleitungen geführt wird. In der Regel wird der Dampf in Dampferzeugern erzeugt und über die Dampfleitungen zunächst zu einer Hochdruck-Teilturbine geführt und anschließend zu einem Zwischenüberhitzer im Dampferzeuger. Im Zwischenüberhitzer wird der Dampf auf eine höhere Temperatur gebracht und danach zu einer Mitteldruck-Teilturbine geführt. Nach Durchströmen des Dampfes durch die Mitteldruck-Teilturbine strömt der Dampf in eine Niederdruck-Teilturbine und von dort in einen Kondensator. Im Kondensator kondensiert der Dampf an gekühlten Kondensatorrohren. Das somit entstandene Kondensat wird über Pumpen zu Vorwärmern bzw. zum Dampferzeuger wieder geführt.

Aufgrund der hohen Temperaturen und der hohen Drücke des Dampfes in den Dampfleitungen sind hohe Anforderungen an die Ventile gestellt. Insbesondere kommt es aufgrund von überkritischen Durchströmungen in den Ventilen zu vergleichsweise hohen Schallemissionen.

Es besteht ein Bedürfnis diese Schallemissionen zu reduzieren. Dies wird gegenwärtig dadurch erreicht, dass Schallisolierungsmaßnahmen durchgeführt werden. Allerdings sind solche Maßnahmen aufwändig und führen zu erhöhten Kosten.

Ein weiteres Problem ist, dass die im Ventil auftretenden Geschwindigkeiten des Dampfes zu einem Überschallstrahl führen können, was im Ventil zu Schwingungen führt. Solche Schwingungen können zu einer Schädigung des Ventils führen. Auch hier besteht ein Bedürfnis diese Schwingungen zu vermeiden.

Aufgabe der Erfindung ist es daher, das Ventil derart zu ändern, dass die Schallemission reduziert wird.

Gelöst wird diese Aufgabe durch eine Ventilanordnung zum Durchströmen eines Strömungsmediums, umfassend einen Ventilkegel und ein Ventilgehäuse mit einem Ventilsitz, wobei die Ventilanordnung mit einem Ventileinlass und einem Ventilauslass ausgebildet ist, wobei der Ventilkegel gegen den Ventilsitz bewegbar ausgebildet ist und eine strömungstechnische Verbindung zwischen dem Ventileinlass und dem Ventilauslass herstellt, wenn der Ventilkegel vom Ventilsitz beabstandet ist und die strömungstechnische Verbindung geschlossen ist, wenn der Ventilkegel am Ventilsitz berührend anliegt, wobei der Ventilkegel oder der Ventilsitz oder der Ventilkegel und der Ventilsitz mit einer Strömungsoberfläche ausgebildet sind, die von einer im wesentlichen kreisrunden Form abweicht.

Das durch die Ventilanordnung strömende Strömungsmedium strömt an der Strömungsoberfläche entlang. Derzeitige Ventile sind mit glatten Strömungsoberflächen ausgebildet. In der Regel sind der Ventilkegel oder der Ventilsitz oder der Ventilkegel und der Ventilsitz kreisrund ausgebildet.

Die Erfindung geht nun den Weg, dass die Strömungsoberfläche keine kreisrunde Form aufweist. Vielmehr geht die Erfindung davon aus, dass die Strömungsoberfläche eine entlang des Umfangs verteilte geänderte Struktur aufweist. Die geänderte Struktur ist dadurch charakterisiert, dass sie regelmäßige Berge und Täler in Umfangsrichtung aufweist. Dadurch ist die Gestalt der Strömungsoberfläche chevronförmig ausgebildet.

Erfindungsgemäß kann die Strömungsoberfläche auch eine zackenförmige Gestaltung aufweisen. Das bedeutet, dass der Ventilkegel die Strömung durch seine zackenförmige Ausbildung beeinflusst.

Ebenso denkbar ist eine sternförmige Ausbildung der Strömungsoberfläche.

Selbstverständlich ist nicht der komplette Ventilkegel oder der Ventilsitz mit der erfindungsgemäßen Strömungsoberfläche ausgebildet. Die Abweichung von einer kreisrunden Form betrifft eine Strömungsoberfläche, die nach der Durchströmung des Zwischenraumes zwischen dem Ventilkegel und dem Ventilsitz sich befindet.

Die erfindungsgemäße Ausgestaltung der Strömungsoberfläche führt zu einer Verwirbelung der Strömung des Strömungsmediums.

Im Falle einer Dampfturbinenventilanordnung ist das Strömungsmedium ein Dampf.

Erfindungsgemäß wird somit stromab des Ventilsitzes der Bereich der Ventilanordnung derart gefertigt, dass er die Form einer Chevrondüse bzw. sternförmigen oder zackigen Düse aufweist, um den Strahlzerfall und dadurch die Schallemission zu beeinflussen. Die von der kreisrunden Form abweichende Kontur kann entweder im Ventilkegel, im Ventilsitz oder auch im Ventilkegel und im Ventilsitz eingebracht werden. Die von der kreisrunden Form abweichende Geometrie sorgt für eine gezielte Wirbelbildung, wodurch der Strahlzerfall gesteigert und gewisse Schallmoden gezielt herausgedämpft werden.

Der Vorteil der Erfindung liegt darin, dass die Schallemission durch einen schnelleren Strahlzerfall verringert wird. Ebenso ist es möglich, gezielt Schallmoden zu dämpfen, was zu einer Reduktion von Ventilschwingungen führt.

Selbstverständlich muss die erfindungsgemäße Geometrie stromab der Sitzfläche angeordnet werden, damit das Ventil noch druckdicht schließen kann.

Durch die Chevrondüsen werden Wirbelstrukturen erzeugt, die zum schnelleren Strahlzerfall beitragen.

Erfindungsgemäß wird vorgeschlagen die Anzahl und Größe der Zacken durch Berechnungsmethoden anzupassen, um Wirbelsysteme gezielt zu erzeugen, so dass unerwünschte akustische Moden herausgedämpft werden können.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Gleiche Bauteile oder Bauteile mit gleicher Funktion sind dabei mit gleichen Bezugszeichen gekennzeichnet.

Ausführungsbeispiele der Erfindung werden nachfolgend anhand der Zeichnungen beschrieben. Diese soll die Ausführungsbeispiele nicht maßgeblich darstellen, vielmehr ist die Zeichnung, wo zur Erläuterungen dienlich, in schematisierter und/oder leicht verzerrter Form ausgeführt.

Im Hinblick auf Ergänzungen der in der Zeichnung unmittelbar erkennbaren Lehren, wird auf den einschlägigen Stand der Technik verwiesen.

Es zeigen
- Figur 1: eine schematische Darstellung einer Ventilanordnung nach dem Stand der Technik,
- Figur 2: eine Schnittansicht durch eine erfindungsgemäße Struktur einer Ventilanordnung,
- Figur 3: eine Schnittansicht einer erfindungsgemäßen alternativen Struktur der Erfindung,
- Figur 4: eine Draufsicht auf einen erfindungsgemäßen Ventilkegel.

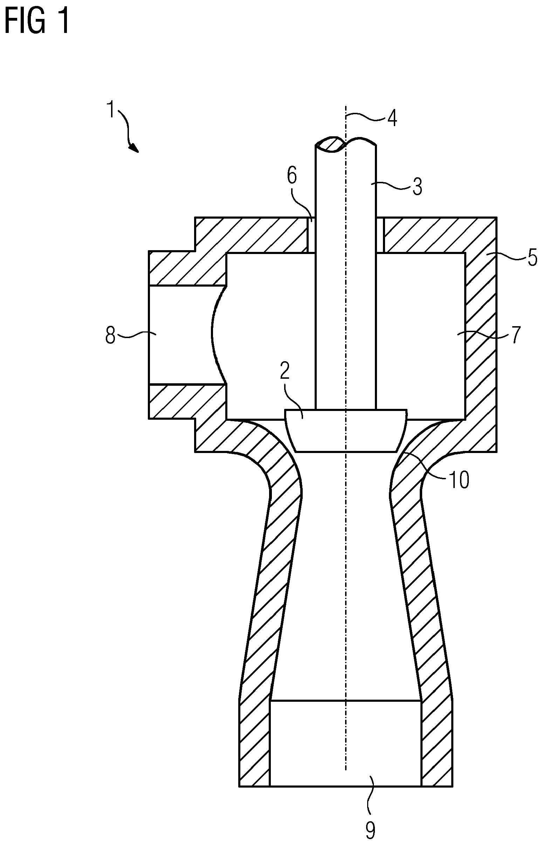

Die Figur 1 zeigt eine Ventilanordnung 1 gemäß dem Stand der Technik. Im Wesentlichen umfasst die Ventilanordnung einen Ventilkegel 2. Der Ventilkegel 2 ist an einer Ventilspindel 3 befestigt. Die Ventilspindel 3 kann in Bewegungsrichtung 4 bewegt werden. Die Ventilanordnung 1 umfasst ferner ein Ventilgehäuse 5. Das Ventilgehäuse 5 ist um den Ventilkegel 2 ausgebildet. Der Durchtritt 6 der Ventilspindel 3 durch das Ventilgehäuse 5 ist abgedichtet. Innerhalb des Ventilgehäuses 5 befindet sich ein Dampfraum 7. Die Ventilanordnung 1 umfasst ferner einen Dampfeinlass 8 und einen Dampfauslass 9. Durch den Dampfeinlass 8 strömt ein Dampf (vorzugsweise vom Dampferzeuger). Am Dampfauslass 9 strömt der Dampf aus der Ventilanordnung 1 heraus zu beispielsweise einer Dampfturbine.

Die Menge des Dampfes, der durch die Ventilanordnung 1 vom Dampfeinlass 8 zum Dampfauslass 9 strömt, wird durch die Stellung des Ventilkegels 2 zu einem Ventilsitz 10 geregelt. In der Figur 1 ist die Ventilanordnung 1 in einem geöffneten Zustand dargestellt. Dies ist anhand der Beabstandung des Ventilkegels 2 zum Ventilsitz 10 dargestellt. In einem geschlossenen Zustand der Ventilanordnung 1 wäre der Ventilkegel 2 derart angeordnet, dass dieser am Ventilsitz 10 berührend anliegt, so dass kein Dampf aus dem Dampfraum 7 in den Dampfauslass 9 strömen kann.

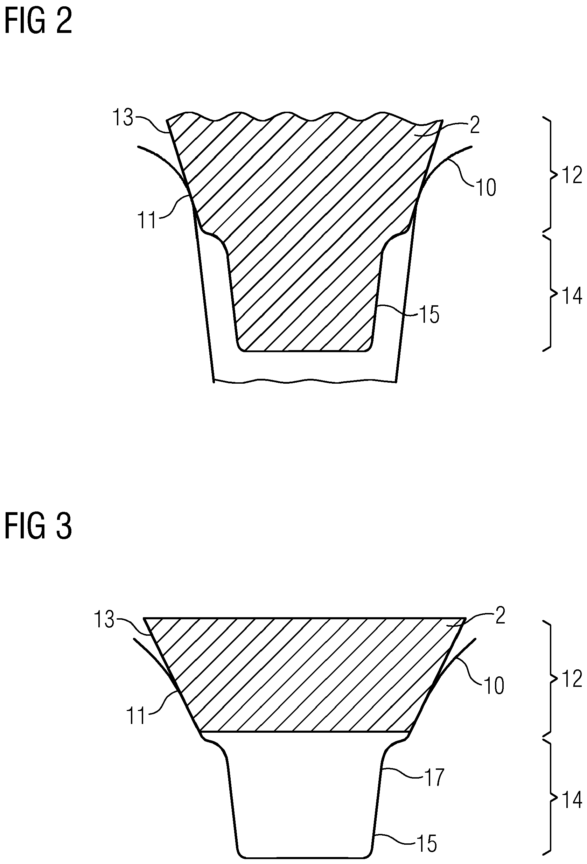

Die Figur 2 zeigt eine erfindungsgemäße Anordnung des Ventilkegels 2. Die Figur 2 zeigt die Anordnung des Ventilkegels 2 gegenüber dem Ventilsitz 10 in einem geschlossenen Zustand. Das bedeutet, dass der Ventilkegel 2 an einer Berührungslinie 11 berührend am Ventilsitz 10 anliegt. Die Berührungslinie 11 ist bei einer zylinderförmigen Ausbildung des Ventilkegels 2 kreisförmig. Andere Formen des Ventilkegels 2, wie beispielsweise oval sind auch möglich. Dann wäre die Berührungslinie 11 von oben gesehen eine ellipsenähnliche Linie. Der Ventilkegel 2 umfasst einen Berührungsbereich 12. Dieser Berührungsbereich 12 des Ventilkegels 2 weist eine im Wesentlichen glatte Strömungsoberfläche 13 auf. Ein aus dem Dampfeinlass 8 strömender Dampf strömt somit an der glatten Strömungsoberfläche 13 in Richtung des Dampfauslasses 9. Desweiteren umfasst der Ventilkegel 2 einen stromab liegenden Profilbereich 14. Dieser Profilbereich 14 zeichnet sich dadurch aus, dass dieser eine Verwirbelungsoberfläche 15 aufweist, die gegenüber der glatten Strömungsoberfläche nicht kreisrund ausgebildet ist. Die Figur 2 zeigt hierbei eine Schnittansicht durch den Ventilkegel 2.

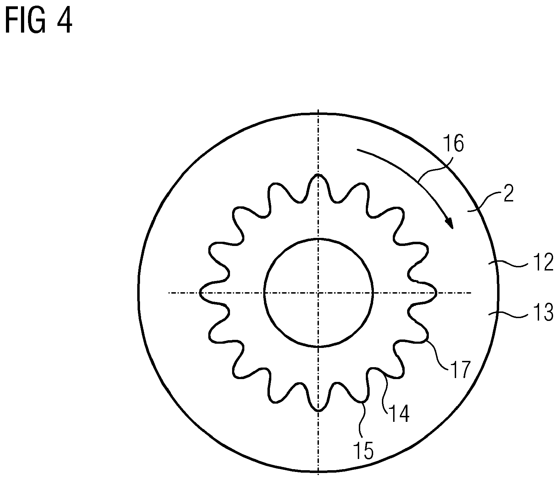

In Figur 4 ist eine Ansicht von unten auf den Ventilkegel 2 zu sehen. Hierbei sieht man den Berührungsbereich 12 mit der glatten Strömungsoberfläche 13 und dem profilierten Verwirbelungsbereich 15, der in einer ersten Ausführungsform chevronförmig ausgebildet ist. Das bedeutet, dass in Umfangsrichtung 16 sogenannte Chevrons 17 angeordnet sind, die eine Beeinflussung auf die Dampfströmung aufweisen. Aus Gründen der Übersichtlichkeit ist lediglich ein Chevron mit dem Bezugszeichen 17 versehen.

In einer alternativen Ausführungsform kann statt eines Chevrons 17 eine zackenförmige oder eine sternförmige Gestalt des Profilbereichs 14 des Ventilkegels 2 aufweisen.

Die Anzahl der Zacken bzw. Chevrons kann an die Strömungsbedingungen angepasst werden.

Die Figur 3 zeigt eine Möglichkeit, den Profilbereich 14 im Bereich des Ventilsitzes 10 anzuordnen. Dazu wird der Profilbereich 14 in chevronförmiger, zackenförmiger oder sternförmiger Gestaltung ausgeführt. Dabei weicht die Verwirbelungsoberfläche 15 im Wesentlichen von der kreisrunden Form ab. Die Verwirbelungsoberfläche 15 führt zu einer Verwirbelung der Strömung. Die Verwirbelungsoberfläche 15 ist nach dem Durchströmen des Dampfes zwischen dem Ventilkegel 2 und dem Ventilsitz 10 angeordnet. Das bedeutet, dass die Verwirbelungsoberfläche 15 stromabwärts angeordnet ist, um die Verwirbelung zu optimieren.

Die Ventilanordnung 1 kann nach einem additiven Fertigungsverfahren ausgebildet werden. Dazu bietet sich das selektive Laserschmelzverfahren an.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Ventilanordnung (1) zum Durchströmen eines Strömungsmediums, umfassend
einen Ventilkegel (2) und
ein Ventilgehäuse (5) mit einem Ventilsitz (10),
wobei die Ventilanordnung (1) mit einem Ventileinlass (8) und einem Ventilauslass (9) ausgebildet ist,
wobei der Ventilkegel (2) gegen den Ventilsitz (10) bewegbar ausgebildet ist und eine strömungstechnische Verbindung zwischen dem Ventileinlass (8) und dem Ventilauslass (9) herstellt, wenn der Ventilkegel (2) vom Ventilsitz (10) beabstandet ist und die strömungstechnische Verbindung geschlossen ist, wenn der Ventilkegel (2) am Ventilsitz (10) berührend anliegt,
**dadurch gekennzeichnet, dass**
der Ventilkegel (2) oder der Ventilsitz (10) oder der Ventilkegel (2) und der Ventilsitz (10) mit einer Verwirbelungsoberfläche (15) ausgebildet sind, die von einer im wesentlichen kreisrunden Form abweicht.

2. Ventilanordnung (1) nach Anspruch 1,
wobei die Verwirbelungsoberfläche (15) chevronförmig ausgebildet ist.

3. Ventilanordnung (1) nach Anspruch 1 oder 2,
wobei die Verwirbelungsoberfläche (15) zackenförmig ausgebildet ist.

4. Ventilanordnung (1) nach einem der vorhergehenden Ansprüche,
wobei die Verwirbelungsoberfläche (15) sternförmig ausgebildet ist.

5. Ventilanordnung (1) nach einem der vorhergehenden Ansprüche,
wobei die Verwirbelungsoberfläche zu einer Verwirbelung der Strömung nach Beabstandung des Ventilkegels (2) vom Ventilsitz (10) führt.

6. Verfahren zur Herstellung einer Ventilanordnung (1) nach einem der vorhergehenden Ansprüche,
wobei der Ventilkegel (2) oder der Ventilsitz (10) oder der Ventilkegel (2) und der Ventilsitz (10) mittels eines additiven Fertigungsverfahrens ausgebildet werden.

7. Verfahren nach Anspruch 6,
wobei als additives Fertigungsverfahren das selektive Laserschmelzen verwendet wird.
